# EUROPEAN PATENT SPECIFICATION

(11) **EP 1 440 252 B1**
(45) Date of publication and mention of the grant of the patent: **14.09.2005**
(21) Application number: 02800612.0
(22) Date of filing: 09.10.2002
(51) Int. Cl.: F16G 5/16

(54) **A BELT FOR A CONTINUOUSLY VARIABLE TRANSMISSION**
RIEMEN FÜR STUFENLOSES GETRIEBE
COURROIE POUR TRANSMISSION A VARIATION CONTINUE

(30) Priority: 09.10.2001 IT TO20010956; 10.04.2002 IT TO20020314
(43) Date of publication of application: 28.07.2004
(73) Proprietor: DAYCO EUROPE S.r.l., 66013 Chieti (IT)
(72) Inventor: LOLLI, Sergio, I-63100 Ascoli Piceno (IT)
(74) Representative: Franzolin, Luigi
(86) International application number: PCT/EP2002/011307
(87) International publication number: WO 2003/031841

(56) References cited:
- EP-A- 1 106 865
- DE-C- 850 539
- JP-A- 5 010 396
- JP-A- 61 286 638
- US-A- 4 595 385
- US-A- 4 734 087
- US-A1- 2001 041 636
- PATENT ABSTRACTS OF JAPAN vol. 010, no. 336 (M-535), 14 November 1986 (1986-11-14) & JP 61 140650 A (DAIHATSU MOTOR CO LTD), 27 June 1986 (1986-06-27)
- PATENT ABSTRACTS OF JAPAN vol. 006, no. 083 (M-130), 21 May 1982 (1982-05-21) & JP 57 022441 A (NISSAN MOTOR CO LTD), 5 February 1982 (1982-02-05)
- PATENT ABSTRACTS OF JAPAN vol. 010, no. 286 (M-521), 27 September 1986 (1986-09-27) & JP 61 103030 A (HONDA MOTOR CO LTD), 21 May 1986 (1986-05-21)

## Description

### TECHNICAL FIELD

The present invention relates to a belt for a continuously variable transmission (CVT).

### BACKGROUND ART

As is known, continuously variable transmissions, or variable speed drives, employ belts with a substantially trapezial cross section (V-belts), which are provided with lateral friction surfaces designed to co-operate with respective sides of pulleys with trapezial or vee-shaped races. Variation of the transmission ratio is performed by modifying, via mechanisms of a known type, the width of the race of the pulleys and consequently the winding diameter of the belt.

For low-power transmissions, there are currently used belts having a body made of elastomeric material and provided with longitudinal cord reinforcing elements designed to bestow the necessary mechanical tensile strength on the belt. The body made of elastomeric material is normally provided with an internal indentation and an external indentation, having the purpose of bestowing on the belt a good flexibility, thus enabling the belt to operate with reduced winding diameters, at the same time maintaining a sufficiently extended lateral surface.

For higher-power transmissions, there is known the use of belts that are provided with transverse stiffening elements, which are set on top of respective teeth of the external indentation and internal indentation and are designed to limit the transverse compression deformations of the belt itself. The stiffening elements set on top of each pair of teeth set opposite to one another, i.e. the inner one and the outer one respectively, can be connected by a connection member extending through the body of the belt.

The above-described belts, in which power transmission occurs through direct contact between the elastomeric material of the body and the pulleys, are not suitable for high-power drives, such as, for instance, the ones that can be employed in variable-speed drives for motor vehicles.

For the latter applications metal belts are generally used, which, however, apart from being relatively costly and heavy, are able to operate only in oil-bath conditions and consequently present evident limits of application.

In an attempt to overcome the above limitations of metal belts, belts have been proposed for dry power drives, which comprise an endless band having an elastomeric body, provided with an internal toothing and an external toothing and a plurality of longitudinal cord inserts embedded in the body, as well as a plurality of discrete transmission members overmoulded on the endless band, so as to embed one tooth of the external toothing and one tooth of the internal toothing. An example of belts of this type is illustrated in EP-A-1 106 865.

### DISCLOSURE OF INVENTION

An object of the present invention is to devise an improved CVT belt which allows to increase torque transmission and belt life and is still relatively simple and unexpensive to manufacture.

The above object is achieved by the present invention, in so far as it regards a A CVT belt comprising an endless flexible band having a body made of elastomeric material and a plurality of longitudinal cord inserts embedded in said body, and a plurality of transmission members fixed along the endless band and laterally delimited by mutually inclined friction flanks for engagement with a vee-shaped race of a pulley, characterised in that each transmission member includes an inner block moulded around said endless band so as to completely surround a length of said endless band and be secured thereto, and a pair of half-shell covering members transversally fitted onto said inner block and defining said friction flanks.

### BRIEF DESCRIPTION OF THE DRAWINGS

For a better understanding of the present invention, some preferred embodiments will be described hereunder with reference to the attached drawings, in which:
- Figure 1 is a partial side view of a belt made according to a first embodiment of the present invention;
- Figure 2 is a partial side view, at an enlarged scale and in partial longitudinal cross section, of the belt of Figure 1;
- Figure 3 is a cross section taken along the line III-III of Figure 2;
- Figure 4 is a partial cross section taken along the line IV-IV of Figure 3;
Figure 5 is a side view, in partial longitudinal cross section, of a belt according to a second embodiment of the invention; and
Figure 6 is a side view, in partial longitudinal cross section, of a belt according to a third embodiment of the invention.

### BEST MODE FOR CARRYING OUT THE INVENTION

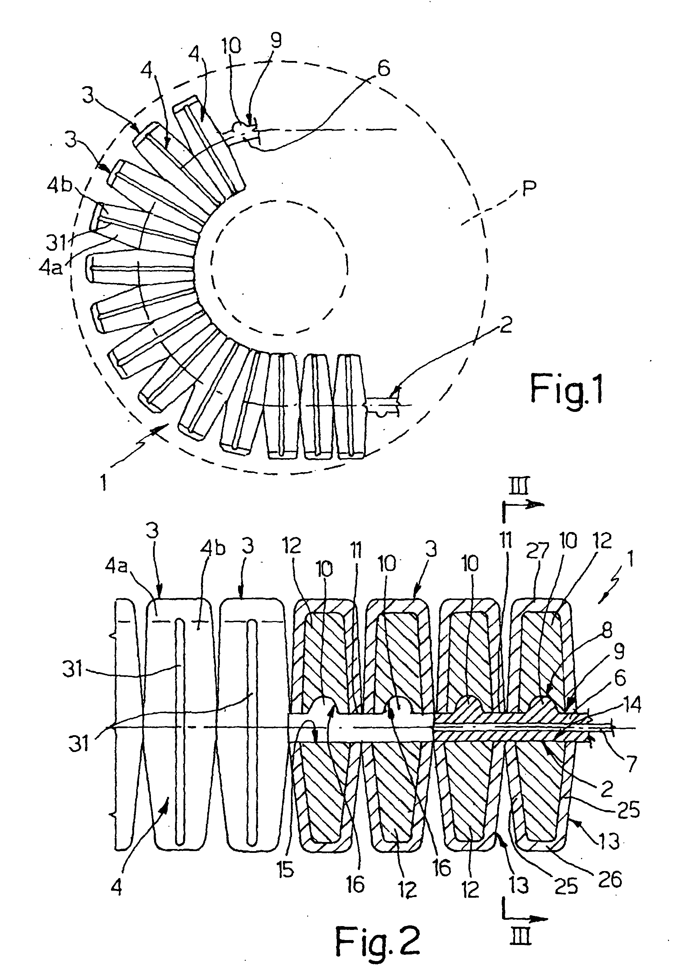

With reference to Figures 1 to 4, numeral 1 designates, as a whole, a belt for a continuously variable transmission (CVT).

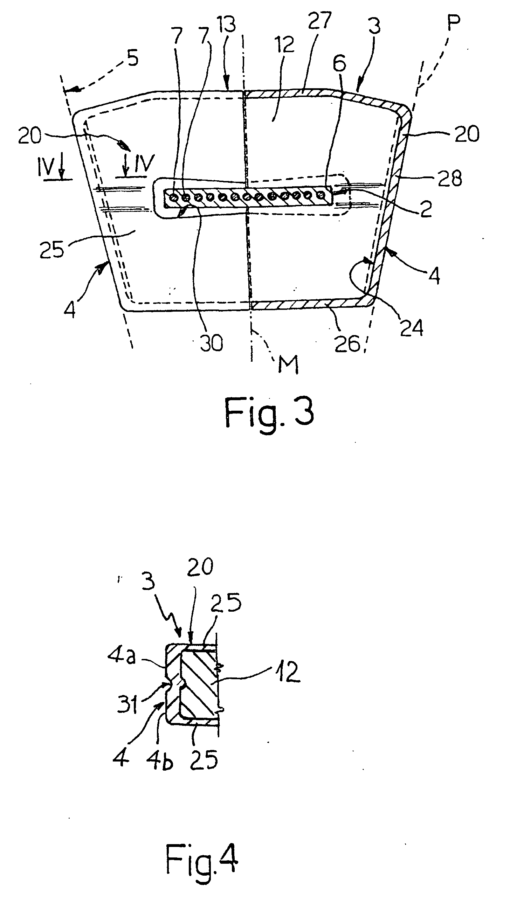

The belt 1 basically comprises a closed-loop endless flexible band 2, having the purpose of transmitting the load, and a plurality of transmission members 3, anchored to the endless band 2 adjacent to one another, having a substantially vee-shaped cross section in order to co-operate by friction, by means of respective pairs of mutually inclined friction flanks 4, with a vee-shaped race 5 of a pulley P (schematically indicated with a dashed line in Figures 1 and 3).

In particular, the endless band 2 basically comprises a toothed body 6 made of elastomeric material, for example HNBR, and a plurality of cord inserts 7, which are substantially inextensible and are embedded in the body 6 and extend longitudinally and parallel to one another along the body itself. The inserts 7, produced according to a conventional spiralling technique, may be made of glass or aramidic fibres, for example of the material known under the trade name Kevlar®.

The band 2 comprises an external toothing 8, i.e., a toothing made on an outer surface 9 of the body 6.

The toothing 8 comprises a plurality of teeth 10 alternated with recesses 11. The teeth 10 conveniently present a substantially semicircular or parabolic cross section, but can have any shape suitable for ensuring a stable coupling with the transmission members 3.

The transmission members 3 each comprise an inner block 12, which is overmoulded around the endless band 2 so as to completely surround a length thereof and embed a respective tooth 10 of the endless band 2, and a friction coating 13 defining the flanks 4 that co-operate with the race 5 of the pulley.

In particular, the inner block 12 of each transmission member 3 has a substantially vee-shaped cross section (Figure 3), and presents a central through cavity 14 engaged by, and mating in shape with, the endless band 2 (Figure 2). In particular, the cavity 14 is delimited, on the side facing the inside of the belt 1, by a plane surface 15 and, on the side facing the toothing 8, presents a recess 16, the shape of which is complementary to the shape of the corresponding tooth 10.

The friction coating 13 is made up of a pair of half-shell covering elements 20, which are fitted transversely on the inner block 12, on opposite sides of the endless band 2, so as to substantially mate with one another along a median plane M of the belt 1 (figure 3).

The covering elements 20 are conveniently made of a plastic material having predetermined frictional properties and good resistance to wear, such as, for example, a polyamide with glass-fibre filler or a fluoropolymer of the class of materials known under the trade name of MARLON-H. An example of a material that can be used is MARLON-H82 produced by M.A.P. s.r.l. of San Giorgio Canavese (Turin), Italy, said material having tensile strength at brake of 48.3 MPa, elongation at brake of 350% (measured according to the standard ASTM D 638), flexural elasticity modulus of 1110 MPa at 23°C, hardness 82 shoreD (ASTM D 2240), maximum operating temperature of 150°C (ASTM D 648) and melting point of 223°C (ASTM D 3418).

The covering members 20 each present a cavity 24 having a shape corresponding to half of the respective inner block 12, and comprise a pair of front walls 25, an inner base wall 26, an outer base wall 27 and a side wall 28, one outer surface of which defines a flank 4 of the transmission member 3 (figure 3).

The front walls 25 present respective median slits 30 elongated in a direction perpendicular to the plane M and open towards the plane M, so as to enable insertion of the endless band 2. The edges of the slits 30 are mutually convergent towards plane M.

The flanks 4 of the transmission members 3 conveniently present one or more grooves 31, which extend longitudinally, i.e., from the inner base wall 26 to the outer base wall 27, with the purpose of dividing the flanks 4 into one or more areas 4a, 4b of contact with the pulley (figure 4).

The front walls 25 are mutually convergent starting from the endless band 2 towards the inside of the belt 1. Consequently, each transmission member 3 presents, in a longitudinal section, a shape which is tapered towards the inside of the belt 1, which is necessary for enabling small winding diameters of the belt 1 (Figure 1) to be obtained without interference between adjacent transmission members 3.

In the embodiment illustrated in Figures 1 to 4, for constructional reasons, the transmission members 3 are slightly tapered also towards the outside, starting from the endless band 2.

A process for manufacturing the belt 1 is described in what follows.

In a first step, the endless band 2 is produced using known techniques employed in the manufacture of toothed belts. In a second step, the endless band 2 is positioned in a mould (not illustrated) having a seat for the endless band 2, and a plurality of cavities, which are intersected by said seat, of a shape corresponding to that of the inner blocks 12 of the transmission members 3 of the belt 1, and which are equal in number to the blocks 12 themselves, in such a way that one tooth of the endless band 2 will be housed in each cavity of the mould. In a third step, the plastic material which makes up the inner blocks 12 is injected into the aforesaid cavities, so as to overmould the inner blocks 12 of the transmission members on the endless band 2, so that they are spaced apart from one another. In a fourth step, a respective pair of covering members 20 is inserted on each inner block 12.

It should be noted that, when assembly is completed, the covering members 20 of each pair of adjacent transmission members 3 are substantially in contact with one another at least in the proximity of the endless band 2. The expression "substantially in contact" is here used both in the sense that the covering members 20 are actually in contact with one another and in the sense that a small clearance is left during assembly, of the order of some tenths of a millimetre, which means that during use there is an effective contact between the elements 20 in the proximity of the endless band 2 at least on the inner side of the belt 1 when the endless band 2 is flexed.

The substantial contact between the transmission members 3 limits the oscillations of the blocks about an axis perpendicular to the plane M when the transmission members 3 come into contact with the pulley. As a result, any fatigue stresses on the endless band 2 are substantially limited.

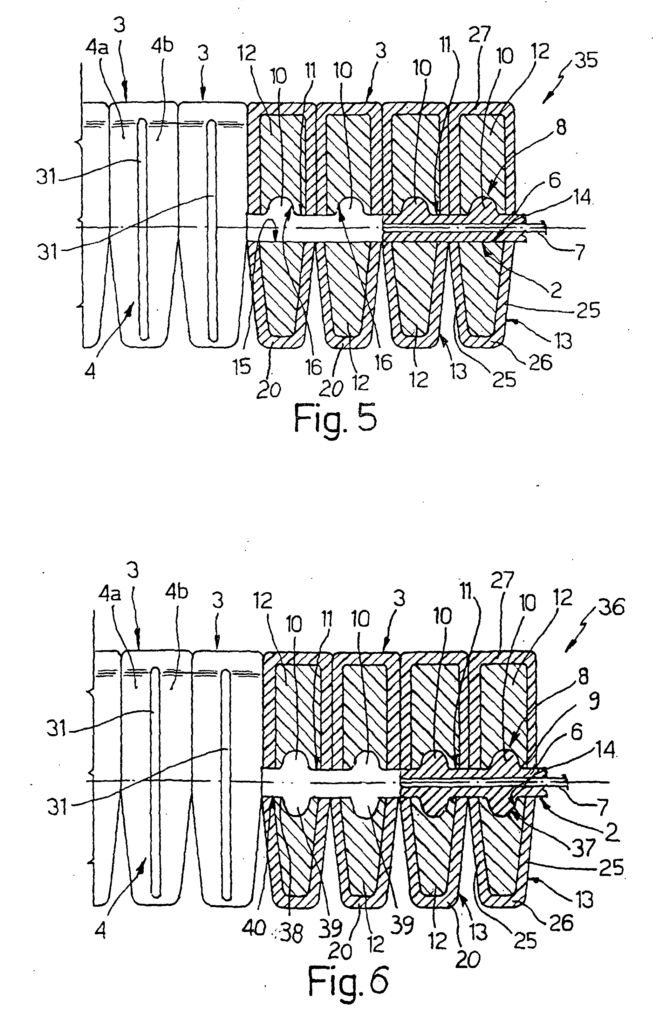

Figure 5 is a partial illustration of a belt 35 according to a different embodiment of the invention.

The belt 35 differs from the belt 1 described above, in that the front walls 25 of each covering member 20 are substantially parallel to one another in the portion thereof that is external to the endless band 2, except for minimum rakes.

In this way, the friction coatings 13 of each pair of adjacent transmission members 3 arrange themselves in contact with one another, in an area corresponding to the portion thereof that is external to the endless band 2, in the rectilinear stretches of the belt and, in particular, in the portion of the belt which disengages from the pulley. The oscillations of the transmission members 3 about a transverse axis are thus reduced and, consequently, also the stresses on the endless band 2.

Figure 6 shows a further embodiment of the present invention, referenced 36 as a whole.

Belt 36 differs from belt 35 in that the endless band 2 has an outer toothing 8 and an inner toothing 37 provided on an inner surface 38 of the body 6 of the endless belt 2.

The inner toothing 37 comprises a plurality of teeth 39 alternating with recesses 40; the teeth 39 of the inner toothing 37 are identical to respective teeth 10 of the outer toothing 8 and disposed on opposite sides with respect to the body 6.

The inner block 12 of each transmission member 3 has a through cavity 14 which mates in shape with a portion of the endless belt 2, so that a tooth 10 of outer toothing 8 and a corresponding tooth 39 of inner toothing 37 are embedded in a respective inner block 12.

From an examination of the characteristics of the belt 1 made according to the present invention, the advantages that the belt makes possible emerge clearly.

The inner blocks 12 principally have the function of driving and structurally supporting the friction covering members 20 and therefore can be made from material having good structural properties but not necessarily optimal wear resistance and friction properties, while the covering members 20, which provide the belt-pulley interface enabling the friction torque transfer, can be made from a material specifically adapted to this purpose.

Research and experiments conducted by the Applicant have shown that the transmission belt of the present invention leads to a high torque transfer (for instance the belt is able to transfer torque values of over 90 Nm) and is therefore suited to a very wide range of motor vehicle and motorcycle applications.

Further, it has been found that, also thanks to the contiguous arrangement of the transmission members 3, a good torque transmission is obtained with relatively low loads on the teeth of the toothing 8 and with low oscillations under load. The fatigue behaviour of the belt 1 is, therefore, improved.

The use of a endless band 2 with a single external toothing enables a considerable reduction in time and costs for production.

Finally, it is clear that modifications and variations can be made to the belt 1, without thereby departing from the scope of protection defined by the ensuing claims.

## Claims

1. A CVT belt comprising an endless flexible band (2) having a body (6) made of elastomeric material and a plurality of longitudinal cord inserts (7) embedded in said body, and a plurality of transmission members (3) fixed along the endless band (2) and laterally delimited by mutually inclined friction flanks (4) for engagement with a vee-shaped race (5) of a pulley (P), **characterised in that** each transmission member (3) includes an inner block (12) moulded around said endless band (2) so as to completely surround a length of said endless band and be secured thereto, and a pair of half-shell covering members (20) transversally fitted onto said inner block (12) and defining said friction flanks (4).

2. A belt as claimed in claim 1, **characterised in that** said covering members (20) define respective inner cavities (24) housing respective halves of the inner block (12).

3. A belt as claimed in claims 1 or 2, **characterised in that** said covering members (20) comprise a pair of front walls (25), an inner base wall (26), an outer base wall (27) and a side wall (28), one outer surface of said side wall (28) defining a flank (4) of the respective transmission member (3).

4. A belt as claimed in claim 3, **characterised in that** said front walls (25) present respective median slits (30) elongated in a direction perpendicular to a median plane (M) of the belt (1) and open towards said madian plane (M), so as to enable insertion of said endless band (2).

5. A belt as claimed in claim 3 or 4, **characterised in that** said flanks (4) of the transmission members (3) have at least one longitudinal groove (31).

6. A belt as claimed in any of the preceding claims, **characterised in that** said endless band (2) has at least one toothing (8, 37) defined by a plurality of teeth (10, 39) spaced by recesses (11, 40) and **in that** said inner blocks (12) of said transmission members (3) each embed at least one respective tooth (10, 39) of said toothing (8, 37).

7. A belt as claimed in claim 6, **characterised in that** said endless band (2) has a single outer toothing (8).

8. A belt as claimed in claim 6, **characterised in that** said endless band (2) has an outer toothing (8) and an inner toothing (37), and **in that** said inner blocks (12) of said transmission members (3) each embed one tooth (10) of said outer toothing (8) and one tooth (39) of said inner toothing (37).

9. A belt as claimed in any of the preceding claims, **characterized in that** said transmission members (3) are arranged substantially in contact with one another at least in the proximity of said endless band (2).

10. A belt as claimed in claim 9, **characterized in that** said inner blocks (12) of said transmission members (3) are spaced apart from one another, and **in that** said covering members (20) of each pair of adjacent transmission members (3) are arranged substantially in contact with one another at least in the proximity of said endless band (2).

11. A belt as claimed in claim 10, **characterized in that** each pair of adjacent transmission members (3) are arranged substantially in contact with one another throughout the portion thereof extending outside said endless band (2).

## Patentansprüche

1. Riemen für ein stufenloses Getriebe, der ein endloses flexibles Band (2) mit einem Körper (6), der aus Elastomermaterial besteht, und einer Vielzahl von Cord-Längseinsätzen (7), die in dem Körper eingebettet sind, sowie eine Vielzahl von Übertragungselementen (3) umfasst, die an dem Endlosband (2) befestigt und seitlich durch zueinander geneigte Reibflanken (4) zum Eingriff mit einer V-förmigen Lauffläche (5) einer Riemenscheibe (P) begrenzt sind, **dadurch gekennzeichnet, dass** jedes Übertragungselement (3) einen inneren Block (12), der so um das Endlosband (2) herum geformt ist, dass er eine Länge des Endlosbandes vollständig umgibt und daran zu befestigen ist, sowie ein Paar Halbschalen-Abdeckelemente (20) enthält, die quer auf den inneren Block (12) aufgepasst sind und die Reibflanken (4) bilden.

2. Riemen nach Anspruch 1, **dadurch gekennzeichnet, dass** die Abdeckelemente (20) jeweils Innenhohlräume (24) aufweisen, die entsprechende Hälften des inneren Blocks (12) aufnehmen.

3. Riemen nach den Ansprüchen 1 oder 2, **dadurch gekennzeichnet, dass** die Abdeckelemente (20) ein Paar vorderer Wände (25), eine innere untere Wand (26), eine äußere untere Wand (27) und eine Seitenwand umfassen, wobei eine Außenfläche der Seitenwand (28) eine Flanke (4) des entsprechenden Übertragungselementes (3) bildet.

4. Riemen nach Anspruch 3, **dadurch gekennzeichnet, dass** die vorderen Wände (25) entsprechende Mittelschlitze (30) aufweisen, die in einer Richtung senkrecht zu einer Mittelebene (M) des Riemens (1) verlängert sind und sich zu der Mittelebene (M) hin öffnen, um Einführen des Endlosbandes (2) zu ermöglichen.

5. Riemen nach Anspruch 3 oder 4, **dadurch gekennzeichnet, dass** die Flanken (4) der Übertragungselemente (3) wenigstens eine Längsnut (31) haben.

6. Riemen nach einem der vorangehenden Ansprüche, **dadurch gekennzeichnet, dass** das Endlosband (2) wenigstens eine Verzahnung (8, 37) aufweist, die durch eine Vielzahl von Zähnen (10, 39) gebildet wird, die durch Vertiefungen (11, 40) beabstandet sind, und **dadurch**, dass die inneren Blöcke (12) der Übertragungselemente (3) jeweils wenigstens einen entsprechenden Zahn (10, 39) der Verzahnung (8, 37) einbetten.

7. Riemen nach Anspruch 6, **dadurch gekennzeichnet, dass** das Endlosband (2) eine einzelne äußere Verzahnung (8) aufweist.

8. Band nach Anspruch 6, **dadurch gekennzeichnet, dass** das Endlosband (2) eine äußere Verzahnung (8) und eine innere Verzahnung (37) aufweist und dass die inneren Blöcke (12) der Übertragungselemente (3) jeweils einen Zahn (10) der äußeren Verzahnung (8) und einen Zahn (39) der inneren Verzahnung (37) einbetten.

9. Riemen nach einem der vorangehenden Ansprüche, **dadurch gekennzeichnet, dass** die Übertragungselemente (3) im Wesentlichen wenigstens in der Nähe des Endlosbandes (2) in Kontakt miteinander angeordnet sind.

10. Riemen nach Anspruch 9, **dadurch gekennzeichnet, dass** die inneren Blöcke (12) der Übertragungselemente (3) voneinander beabstandet sind und dass die Abdeckelemente (20) jedes Paars aneinander grenzender Übertragungselemente (3) im Wesentlichen wenigstens in der Nähe des Endlosbandes (2) in Kontakt miteinander angeordnet sind.

11. Riemen nach Anspruch 10, **dadurch gekennzeichnet, dass** jedes Paar aneinander grenzender Übertragungselemente (3) im Wesentlichen über den gesamten Abschnitt desselben, der sich außerhalb des Endlosbandes (2) erstreckt, in Kontakt miteinander angeordnet ist.

## Revendications

1. Courroie de transmission CVT comprenant une bande souple sans fin (2) comportant un corps (6) constitué d'un matériau élastomère et une pluralité d'inserts longitudinaux de type cordons (7) incorporés dans ledit corps, et une pluralité d'éléments de transmission (3) fixés le long de la bande sans fin (2) et délimités latéralement par des flancs de friction mutuellement inclinés (4) pour un engagement avec la gorge en forme de V (5) d'une poulie (P), **caractérisée en ce que** chaque élément de transmission (3) comprend un bloc intérieur (12) moulé autour de ladite bande sans fin (2) de façon à complètement entourer une longueur de ladite bande sans fin et à être fixés à celle-ci, et une paire d'éléments de recouvrement en forme de demi-coquille (20) adaptés transversalement sur ledit bloc intérieur (12) et définissant lesdits flancs de friction (4).

2. Courroie selon la revendication 1, **caractérisée en ce que** lesdits éléments de recouvrement (20) définissent des cavités intérieures respectives (24) recevant les moitiés respectives du bloc intérieur (12).

3. Courroie selon la revendication 1 ou 2, **caractérisée en ce que** lesdits éléments de recouvrement (20) comprennent une paire de parois avant (25), une paroi de base intérieure (26), une paroi de base extérieure (27) et une paroi latérale (28), une surface extérieure de ladite paroi latérale (28) définissant un flanc (4) de l'élément de transmission respectif (3).

4. Courroie selon la revendication 3, **caractérisée en ce que** lesdites parois avant (25) présentent des fentes médianes respectives (30) allongées dans une direction perpendiculaire à un plan médian M de la courroie (1) et s'ouvrent vers l'extérieur dudit plan médian (M), de façon à permettre l'insertion de ladite bande sans fin (2).

5. Courroie selon la revendication 3 ou 4, **caractérisée en ce que** lesdits flancs (4) des éléments de transmission (3) présentent au moins une rainure longitudinale (31).

6. Courroie selon l'une quelconque des revendications précédentes, **caractérisée en ce que** ladite bande sans fin (2) présente au moins une denture (8, 37) définie par une pluralité de dents (10, 39) espacées par des évidements (11, 40) et **en ce que** lesdits blocs intérieurs (12) et lesdits éléments de transmission (3) incorporent chacun au moins une dent respective (10, 39) de ladite denture (8, 37).

7. Courroie selon la revendication 6, **caractérisée en ce que** ladite bande sans fin (2) comporte une seule denture extérieure (8).

8. Courroie selon la revendication 6, **caractérisée en ce que** ladite bande sans fin (2) présente une denture extérieure (8) et une denture intérieure (37), et **en ce que** lesdits blocs intérieurs (12) desdits éléments de transmission (3) incorporent chacun une dent (10) de ladite denture extérieure (8) et une dent (39) de ladite denture intérieure (37).

9. Courroie selon l'une quelconque des revendications précédentes, **caractérisée en ce que** lesdits éléments de transmission (3) sont agencés pour être sensiblement en contact les uns avec les autres au moins à proximité de ladite bande sans fin (2).

10. Courroie selon la revendication 9, **caractérisée en ce que** lesdits blocs intérieurs (12) desdits éléments de transmission (3) sont espacés les uns des autres, et **en ce que** lesdits éléments de recouvrement (20) de chaque paire d'éléments de transmission adjacents (3) sont agencés pour être sensiblement en contact les uns avec les autres au moins à proximité de ladite bande sans fin (2).

11. Courroie selon la revendication 10, **caractérisée en ce que** chaque paire d'éléments de transmission adjacents (3) est agencée pour être sensiblement en contact avec une autre sur toute la partie de ceux-ci s'étendant à l'extérieur de ladite bande sans fin (2).
